# FASCICULE DE BREVET EUROPEEN

(11) **EP 2 811 667 B1**
(45) Date de publication et mention de la délivrance du brevet: **25.07.2018**
(21) Numéro de dépôt: 14171565.6
(22) Date de dépôt: 06.06.2014
(51) Int. Cl.: H04B 10/118, H04B 10/112, H04J 14/02

(54) **Procédé et dispositif de transmission optique à débit utile adaptatif**
Verfahren und Vorrichtung zur optischen Übertragung mit adaptivem Nutzdurchsatz
Method and device for optical transmission with adaptive useful throughput

(30) Priorité: 07.06.2013 FR 1301304
(43) Date de publication de la demande: 10.12.2014
(73) Titulaire: THALES, 92400 Courbevoie (FR)
(72) Inventeur: Le Kernec, Arnaud, 31100 TOULOUSE (FR); Dervin, Mathieu, 31100 TOULOUSE (FR); Sotom, Michel, 31100 TOULOUSE (FR)
(74) Mandataire: Collet, Alain

(56) Documents cités:
- EP-A1- 1 592 153
- WO-A1-03/088542
- FR-A1- 2 957 214
- US-A1- 2004 208 602
- ULMER T G ET AL: "Differential Phase-Shift Keying in Spatial Diversity Transmitters for Fade Mitigation", IEEE JOURNAL OF SELECTED TOPICS IN QUANTUM ELECTRONICS, IEEE SERVICE CENTER, PISCATAWAY, NJ, US, vol. 16, no. 5, 1 septembre 2010 (2010-09-01), pages 1091-1098, XP011299327, ISSN: 1077-260X

## Description

La présente invention concerne un procédé de transmission d'un signal optique dont le débit utile de données est adapté aux perturbations du canal de propagation. L'invention concerne aussi un dispositif de transmission par signal optique configuré pour mettre en oeuvre un tel procédé.

La communication par signal optique est une technologie connue faisant appel à la propagation de la lumière pour transmettre des informations au travers d'un canal de communication entre deux points distants. Elle a déjà été mise en oeuvre pour l'échange d'information entre des satellites, ou entre un satellite et un terminal fixe sur la terre et est couramment utilisée dans les réseaux de télécommunication terrestre par fibre optique. Un signal optique, par exemple un faisceau laser, modulé en fonction de données utiles, est transmis d'un terminal émetteur vers un terminal récepteur. D'une façon générale, le canal de communication d'un dispositif de transmission optique peut être l'espace libre (atmosphère, espace), le milieu marin, un guide optique ou tout autre milieu transparent à la lumière. Les conditions de transmission d'un signal optique à travers ces différents milieux peuvent varier, au cours du temps ou de l'espace. Ces perturbations entrainent une dégradation de la qualité du signal optique reçu par le terminal récepteur (signal atténué, phase aléatoire) et sont susceptibles d'altérer les données transmises.

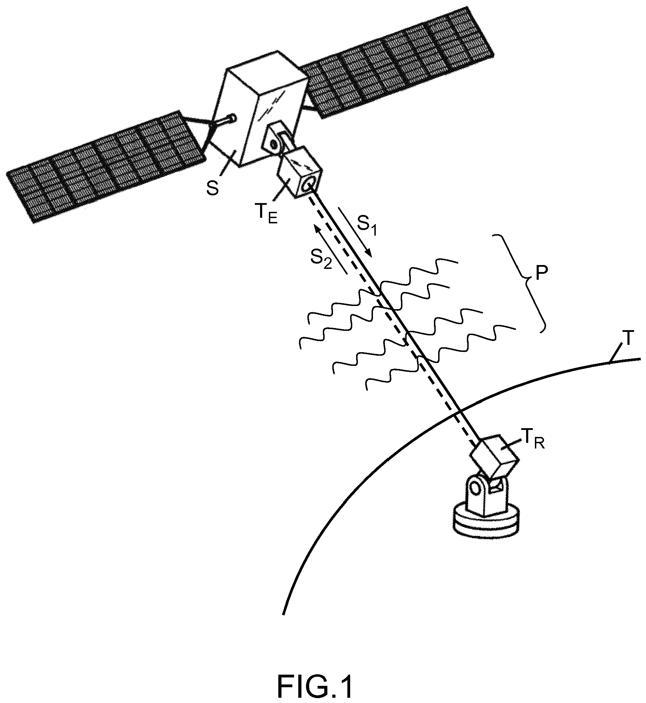

Conformément à la figure 1, un satellite S est muni d'un terminal émetteur T_{E} qui transmet des données numériques à un terminal récepteur T_{R} situé sur terre T par un signal optique primaire S₁. L'atmosphère terrestre peut perturber la propagation du signal entre les deux terminaux et par suite provoquer des erreurs de transmission des données numériques. Diverses techniques ont été développées pour adapter la transmission optique aux perturbations P du canal de communication. On connaît en particulier du document FR2957214, un procédé de transmission optique par signaux laser, dont un rendement de codage des données numériques transmises par un signal laser est adapté aux conditions de propagation du faisceau laser. Pour tenir compte de l'effet de ces perturbations P sur la transmission optique, il est connu de disposer d'un signal optique secondaire S₂, émis par le terminal récepteur et reçu par le terminal émetteur. Les conditions de propagation du signal optique, caractérisées au moyen du signal optique secondaire S₂ reçu par le terminal émetteur, permettent d'adapter le rendement de codage, et donc le débit utile en temps réel. Pour une transmission optique fortement perturbée, un rendement de codage faible est retenu, le signal transmis contient une redondance plus importante de données numériques utiles.

L'adaptation du débit utile des solutions connues ne permet de maintenir la transmission que pour des perturbations d'amplitude modérée ou, lorsqu'elle est associée à de l'entrelacement, pour des perturbations importantes mais de durée limitée. Dès lors qu'interviennent des atténuations importantes, ou qu'elles interviennent sur une durée trop longue par rapport aux durées d'entrelacement envisageables dans la pratique, ces solutions connues ne permettent pas d'assurer un débit utile satisfaisant. Il est ainsi désirable de disposer d'un procédé de transmission optique permettant d'adapter et d'optimiser le débit utile transmis sur une plage étendue de perturbations du canal de transmission, tout en permettant une graduation fine de l'adaptation de débit utile à l'interieur de cette plage.

L'invention vise à proposer une solution alternative palliant ces difficultés en mettant en oeuvre à la fois le multiplexage en longueur d'onde et le codage à rendement variable pour adapter le débit utile au plus juste sur une plage étendue de variations des conditions de propagation de l'onde optique.

A cet effet, l'invention a pour objet un procédé de transmission de données numériques par un signal optique primaire entre un terminal émetteur et un terminal récepteur, caractérisé par le fait qu'il comporte des étapes consistant à :
- déterminer une grandeur caractéristique de dégradation d'onde optique entre le terminal émetteur et le terminal récepteur,
- déterminer un nombre de canaux de transmission au moyen d'une première fonction décroissante par paliers de la grandeur caractéristique de dégradation d'onde optique,
- répartir les données numériques sur les canaux de transmission,
- moduler des signaux optiques de longueurs d'ondes distinctes, en nombre égal au nombre de canaux de transmission; chacun des signaux optiques respectifs étant modulé par des données numériques réparties respectivement sur l'un des canaux de transmission,
- générer le signal optique primaire par multiplexage en longueur d'onde des signaux optiques,
- transmettre une configuration de transmission du terminal émetteur au terminal récepteur; la configuration de transmission comprenant au moins le nombre de canaux de transmission.

L'invention porte également sur un dispositif de transmission de données numériques par un signal optique primaire comprenant un terminal émetteur et un terminal récepteur ; ledit terminal émetteur comprenant :
- un processeur, comprenant des moyens pour répartir et transmettre des données numériques sur des canaux de transmission,
- des sources optiques, aptes à émettre des signaux optiques de longueurs d'ondes distinctes ; chacune des sources optiques comprenant des moyens pour moduler le signal optique de ladite source optique en fonction de données numériques transmises par le processeur sur un canal de transmission,
- un multiplexeur de longueur d'onde, apte à générer le signal optique primaire par multiplexage en longueur d'onde de signaux optiques émis par les sources optiques,
- des moyens pour déterminer une grandeur caractéristique de dégradation d'onde optique entre les terminaux émetteur et récepteur,
- un module de répartition, implémenté dans le processeur, apte à répartir les données numériques sur un nombre de canaux de transmission, inférieur ou égal au nombre de sources optiques,
- un module de contrôle, implémenté dans le processeur, apte à déterminer le nombre de canaux de transmission, au moyen d'une fonction décroissante par paliers de la grandeur caractéristique de dégradation d'onde optique,
- des moyens d'activation d'un nombre de sources optiques égal au nombre de canaux de transmission ; le signal optique primaire étant généré par multiplexage des signaux optiques émis par les sources optiques ainsi activées ; chacun des signaux optiques étant modulé par des données numériques.

L'invention sera mieux comprise et d'autres avantages apparaîtront à la lecture de la description détaillée des modes de réalisation donnés à titre d'exemple sur les figures suivantes.
La figure 1, déjà présentée, représente un exemple de transmission optique, entre un satellite et la terre, dans lequel le procédé peut être mis en oeuvre,
la figure 2 représente les principaux modules fonctionnels d'un terminal émetteur de transmission optique selon l'invention,
la figure 3 représente les principaux modules d'un terminal récepteur de transmission optique selon l'invention,
les figures 4a et 4b représentent l'architecture fonctionnelle respectivement d'un terminal émetteur et d'un terminal récepteur selon un premier mode de réalisation de l'invention,
les figures 5a et 5b représentent l'architecture fonctionnelle respectivement d'un terminal émetteur et d'un terminal récepteur selon un second mode de réalisation de l'invention,
la figure 6 représente l'architecture fonctionnelle d'un terminal récepteur selon un troisième mode de réalisation de l'invention,
la figure 7 illustre le principe de fonctionnement d'un procédé de transmission optique selon l'état connu de la technique,
les figures 8a et 8b illustrent le principe de fonctionnement d'un procédé de transmission optique selon deux variantes de l'invention.

Par souci de clarté, les mêmes éléments porteront les mêmes repères dans les différentes figures.

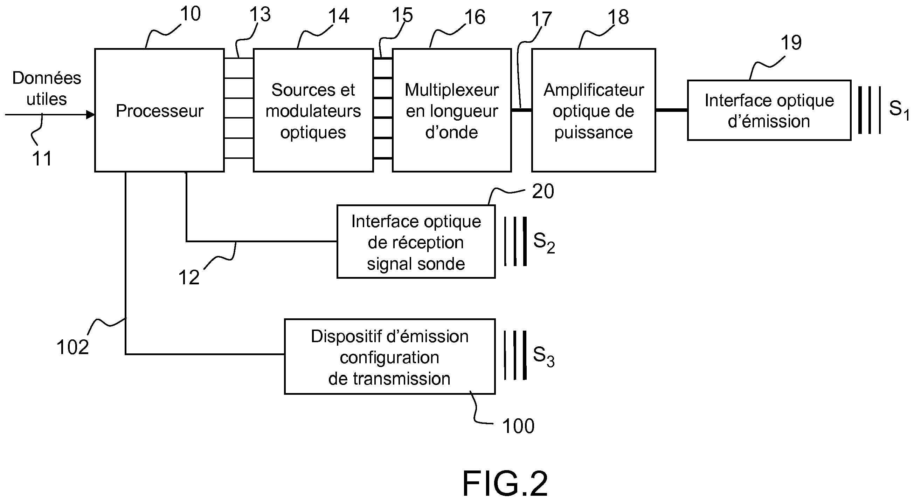

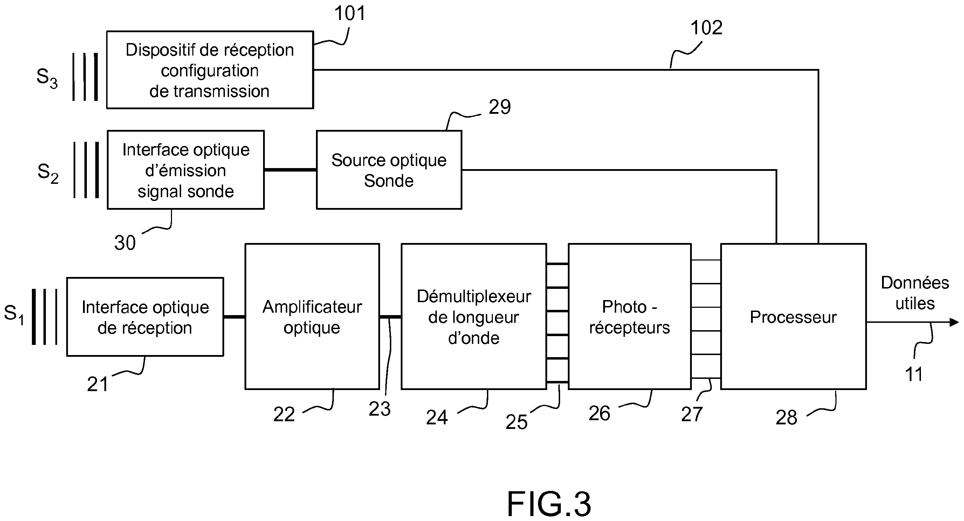

Un dispositif de transmission de données numériques par signal optique comprend d'une part un terminal émetteur T_{E} dont les principaux modules fonctionnels sont représentés sur la figure 2 et d'autre part un terminal récepteur T_{R} dont les principaux modules fonctionnels sont représentés sur la figure 3.

Conformément à la figure 2, le terminal émetteur T_{E} comprend :
- un processeur 10, comprenant des moyens pour répartir et transmettre des données numériques 11 sur des canaux de transmission 13,
- des sources optiques 14, aptes à émettre des signaux optiques 15 de longueurs d'ondes distinctes ; chacune des sources optiques 14 comprenant des moyens pour moduler le signal optique 15 de ladite source optique 14 en fonction de données numériques 11 transmises par le processeur 10 sur un canal de transmission 13,

- un multiplexeur de longueur d'onde 16, apte à générer un signal optique 17 par multiplexage en longueur d'onde de signaux optiques 15 émis par les sources optiques 14 ;
- un amplificateur optique de puissance 18, apte a générer un signal optique primaire S₁ par amplification du signal optique 17 transmis par le multiplexeur de longueur d'onde 16,
- une interface optique d'émission 19, pour la transmission du signal optique primaire S₁ à destination du terminal récepteur T_{R}.
- une interface optique de réception 20, d'un signal optique secondaire S₂ émis par le terminal récepteur T_{R;} une grandeur caractéristique 12 de dégradation d'onde optique entre les terminaux émetteur T_{E} et récepteur T_{R} étant mesurée par réception du signal optique S₂ émis par le terminal récepteur T_{R} vers le terminal émetteur T_{E}. Notons à ce stade que cette interface optique de réception 20 est une option possible du dispositif selon l'invention ; le cas où on dispose de prédictions de cette dégradation ne nécessite pas la mise en oeuvre de cette interface optique de réception 20,
- un dispositif d'émission 100 d'un signal tertiaire S₃ à destination du terminal récepteur T_{R} ; le signal tertiaire S₃ étant porteur d'une configuration de transmission 102 permettant au terminal récepteur T_{R} de traiter les données utiles 11 transmises par le signal optique primaire S₁. Comme nous allons le détailler par la suite, la configuration de transmission 102 comprend au moins le nombre de canaux de transmission 13 mis en oeuvre pour la transmission des données utiles, de manière à permettre le traitement du signal optique primaire S₁ par le terminal récepteur T_{R}. Notons à ce stade que ce dispositif d'émission 100 est une option possible du dispositif selon l'invention, nous détaillerons par la suite des options alternatives permettant la transmission de la configuration de transmission 102 entre les deux terminaux ; ces options alternatives ne nécessitant pas la mise en oeuvre du dispositif d'émisssion 100.

Conformément à la figure 3, le terminal récepteur T_{R} comprend :
- une interface optique de réception 21 du signal optique primaire S₁ transmis par le terminal émetteur T_{E},
- un amplificateur optique 22 apte à générer un signal optique 23 par amplification du signal optique primaire S₁,
- un démultiplexeur de longueur d'onde 24 apte à générer par démultiplexage du signal optique 23, des signaux optiques 25 de longueurs d'ondes distinctes,
- des convertisseurs 26, aptes à convertir en signaux électriques 27 chacun des signaux optiques 25 de longueurs d'ondes distinctes,
- un processeur 28, comprenant des moyens de recombinaison des signaux électriques 27 pour reconstituer les données numériques 11 transmises par le terminal émetteur T_{E},
- une source optique 29 et une interface optique d'émission 30 aptes à émettre le signal optique secondaire S₂ à destination du terminal émetteur T_{E}. Comme c'est le cas de l'interface optique de réception 20, la mise en oeuvre de cette interface optique d'émission 30 est une option possible de la présente invention ; le cas où on dispose de prédictions de la dégradation d'onde optique ne nécessite pas la mise en oeuvre de cette interface optique de réception 30,
- un dispositif de réception 101 du signal tertiaire S₃ émis par le terminal émetteur T_{E} ; le signal tertiaire transmettant la configuration de transmission 102, de manière à permettre le traitement du signal optique primaire S₁ par le terminal récepteur T_{R}. Comme c'est le cas du dispositif d'émission 100, la mise en oeuvre du dispositif de réception est une option possible de la présente invention, nous détaillerons par la suite des options alternatives ne nécessitant pas la mise en oeuvre du dispositif de réception 101.

Les conditions de transmission de l'onde optique entre les terminaux émetteur T_{E} et récepteur T_{R} sont déterminées par le terminal émetteur au moyen d'une caractéristique de réception du signal optique secondaire S₂, dénommée grandeur caractéristique de dégradation 12 d'onde optique entre les terminaux émetteur T_{E} et récepteur T_{R}. Le dispositif de transmission dispose ainsi en temps réel d'une grandeur représentative des conditions de transmission, permettant d'adapter de manière continue la transmission des données numériques. Ainsi, le terminal émetteur selon l'invention comprend des moyens de mesure d'une grandeur caractéristique 12 de dégradation d'onde optique entre les terminaux émetteur T_{E} et récepteur T_{R}. Avantageusement, la grandeur caractéristique de dégradation 12 d'onde optique est une puissance de réception ou une direction de réception du signal optique secondaire S₂ reçu par le terminal émetteur T_{E}. Dans une mise en oeuvre alternative, les conditions de transmission de l'onde optique entre les terminaux émetteur T_{E} et récepteur T_{R} sont connues par ailleurs et évoluent de façon prédéterminée. Elles peuvent par exemple être prédites à partir de la connaissance de la trajectoire du satellite.

Le dispositif de transmission comprend logiquement un même nombre de sources optiques 14 et de convertisseurs 26, dit nombre maximal de canaux de transmission Nₘₐₓ. Comme nous allons le détailler, le dispositif de transmission permet de couvrir une plage de perturbation d'autant plus étendue que le nombre maximal de canaux de transmission Nₘₐₓ est élevé. Un nombre trop important se traduit toutefois par une certaine complexité matérielle.

L'invention porte en premier lieu sur un procédé de transmission optique qui adapte le nombre de longueurs d'ondes multiplexées aux conditions de transmission de l'onde optique entre les terminaux émetteur et récepteur. Pour cela, le procédé selon l'invention comporte des étapes consistant à :
- déterminer une grandeur caractéristique 12 de dégradation d'onde optique entre le terminal émetteur T_{E} et le terminal récepteur T_{R},
- déterminer un nombre N_{λ} de canaux de transmission 13 au moyen d'une première fonction décroissante par paliers de la grandeur caractéristique 12 de dégradation d'onde optique,
- répartir les données numériques 11 sur les canaux de transmission 13,
- moduler des signaux optiques 15 de longueurs d'ondes distinctes, en nombre égal au nombre N_{λ} de canaux de transmission ; chacun des signaux optiques 15 respectifs étant modulé par des données numériques 11 réparties respectivement sur l'un des canaux de transmission 13,
- générer le signal optique primaire S₁ par multiplexage en longueur d'onde des signaux optiques 15.
- transmettre une configuration de transmission 102 du terminal émetteur T_{E} au terminal récepteur T_{R} ; la configuration de transmission 102 comprenant au moins le nombre N_{λ} de canaux de transmission 13.

Au cours d'une session de transmission de données numériques entre le terminal émetteur et le terminal récepteur, le procédé adapte en temps réel le nombre de canaux de transmission 13 aux conditions de transmission. Ainsi, lorsque les conditions de transmission sont bonnes, le procédé retient un nombre N_{λ} élevé de canaux de transmission, par exemple égal au nombre maximal de transmission Nₘₐₓ. Le débit de bit du signal optique obtenu après multiplexage est égal à la somme des débits de bit des sources optiques, la puissance optique délivrée par l'amplificateur 18 est partagée entre les différentes sources optiques 14 sollicitées. Lorsque les conditions de transmission se déteriorent, il est possible de maintenir la qualité du signal, en retenant un plus faible nombre de canaux de transmission 13. Après l'étape d'amplification, la puissance optique du signal optique primaire S₁ délivrée par l'amplificateur 18 est alors concentrée sur un plus faible nombre de sources optiques 14, contribuant à améliorer le rapport signal à bruit en réception et par conséquent à réduire le taux d'erreur de bit des données numériques reçues par le terminal récepteur.

Pour améliorer la qualité de transmission, il est aussi envisagé de coder les données numériques à transmettre. Le codage consiste typiquement à ajouter de la redondance dans les données numériques transmises par rapport à l'information utile. Par exemple, dans le cas de codes systématiques, cette redondance peut comprendre l'ajout de bits de parité pour détecter d'eventuelles erreurs dans le signal utile qui est reçu après transmission. Le débit de bits transmis est alors la somme du débit de bits utiles, qui correspond au volume binaire de l'information utile, et du débit de bits de redondance issus de l'opération de codage. De façon générale, pour des codes systématiques ou non systématiques, on définit le rendement de codage η comme le quotient du débit de bits utiles par le débit de bits transmis en sortie du codeur, autrement dit après codage.

Avantageusement, le procédé comporte des étapes consistant à :
- déterminer un rendement de codage η, au moyen d'une seconde fonction décroissante de la grandeur caractéristique 12 de dégradation d'onde optique,
- coder les données numériques 11 réparties sur chacun des canaux de transmission 13 selon le rendement de codage η déterminé précédemment.

Dans ce cas, la configuration de transmission 102, comprend en plus du nombre N_{λ} de canaux de transmission 13, le rendement de codage η, de manière à permettre un décodage adapté des données utiles reçues par le terminal récepteur T_{R}.

Une autre technique de traitement de données numériques consiste à entrelacer les données à transmettre. Cette technique permet d'étendre la capacité de correction de certains codes correcteurs d'erreurs à des séquences de bits erronées plus longues que lorsque le code correcteur d'erreur est utilisé seul. De telles séquences de bits erronés peuvent se produire lorsque les conditions de transmission sont fortement dégradées pendant une durée relativement longue. Le principe de l'entrelacement est de mélanger les bits codés avant transmission selon un schéma prédéterminé et de les remettre dans l'ordre à la réception, avant décodage, suivant ce même schéma. De cette manière, les échantillons de signal fortement affectés par un épisode d'atténuation de longue durée dans le canal de propagation sont dispersés en des séquences erronées plus courtes ne dépassant pas les capacités de correction du code utilisé.

Avantageusement, le procédé comporte une étape d'entrelacement des données numériques 11 réparties sur chacun des canaux de transmission 13. Dans ce cas, la configuration de transmission 102, comprend en plus du nombre N_{λ} de canaux de transmission 13, et éventuellement le rendement de codage η, une information de configuration du procédé d'entrelacement mis en oeuvre, de manière à permettre un désentrelacement adapté des données utiles reçues par le terminal récepteur T_{R}. Une telle information de configuration permet de rendre l'entrelacement facultatif, ou bien encore permet une sélection entre plusieurs fonctions d'entrelacement prédéfinies. La transmission de la configuration de transmission n'est pas nécessaire lorsque l'entrelacement est imposé par la forme d'onde.

Pour transmettre au terminal récepteur la configuration de transmission 102, nous avons mentionné une première option consistant à mettre en oeuvre sur le terminal émetteur T_{E} un dispositif d'émission 100 d'un signal tertiaire S₃ vers un dispositif de réception 101 du terminal récepteur T_{R}. Avantageusement, le signal tertiaire S₃ peut être un signal optique, dont la longueur d'onde est distincte de toutes celles déjà utilisées pour la transmission des données utiles proprement dites, autrement dit distinctes des longueurs d'ondes des signaux optiques 15 porteurs des données utiles 11. Dans ce cas, le dispositif d'émission 100 peut comprendre une source laser, une fonction de modulation du signal optique, une fonction de codage, éventuellement un amplificateur de puissance, et éventuellement une interface optique permettant le couplage au milieu de propagation, par exemple un télescope secondaire dans le cas de transmission optique spatiale. Notons également, que l'interface optique du dispositif d'émission 100 du signal tertiaire S₃ peut éventuellement être confondu avec l'interface optique de réception 20 du signal secondaire S₂.

A la réception, le dispositif de réception 101 comprend alors une interface de réception, par exemple un télescope, ainsi éventuellement qu'une fonction d'amplification, de démodulation et de décodage à la réception. Cette transmission optique est préférentiellement de faible débit, autorisant ainsi un très fort taux de codage et permettant de réaliser une liaison beaucoup plus robuste aux perturbations P du canal de communication. Ainsi, en cas de dégradation très forte des conditions de transmission, la perte de la liaison de transmission de la configuration de transmission 102 implique nécessairement que les conditions de transmission sont à fortiori trop mauvaises pour la transmission des données utiles. Notons que ce dispositif de transmission annexe peut également remplir d'autres fonctions, comme celle d'une balise d'accrochage pour le système de pointage, d'acquisition et de poursuite du terminal récepteur.

Dans une mise en oeuvre alternative, le signal tertiaire S₃ peut être un signal hyperfréquence. Dans ce cas, on peut avantageusement mettre en oeuvre les techniques connues de transmission satellite-sol dans la mesure où la quantité de données à transmettre, i.e. le contenu de la configuration de transmission 102, est dans ce cas très faible; leur transmission ne présentant donc pas de difficulté particulière.

Des options alternatives permettant de transmettre au terminal récepteur la configuration de transmission 102, et ne nécessitant pas de mettre en oeuvre des dispositifs d'émission 100 et de réception 101 du signal tertiaire S₃, sont également décrites par la suite.

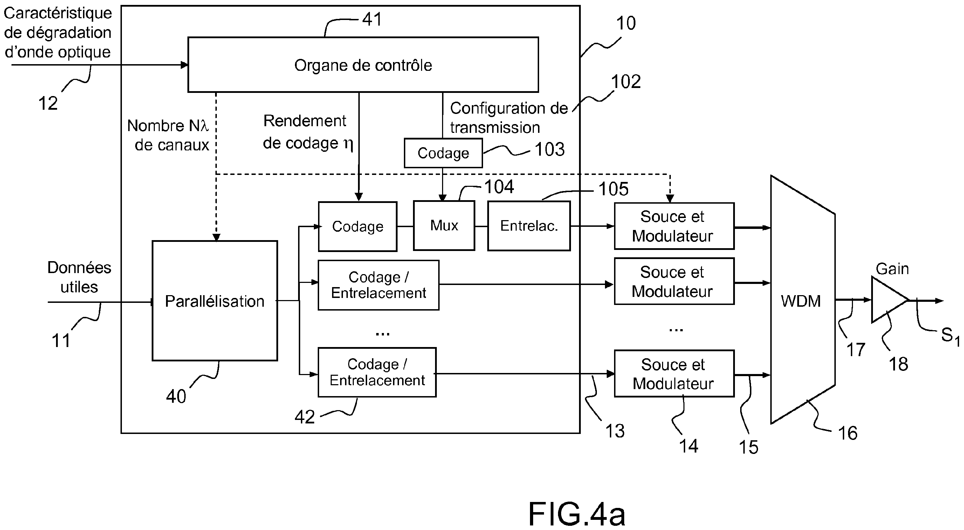

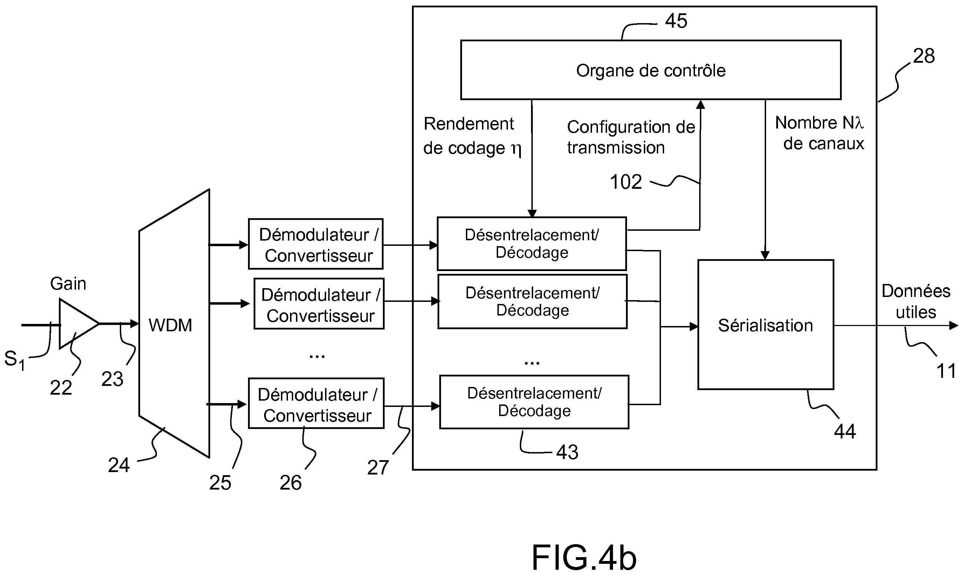

Les figures 4a et 4b représentent l'architecture fonctionnelle respectivement d'un terminal émetteur et d'un terminal récepteur selon un premier mode de réalisation de l'invention.

Comme précédemment décrit, le terminal émetteur du dispositif de transmission comprend un processeur 10 dont une mission est de répartir des données numériques 11. Le dispositif comprend ainsi un module de répartition 40, on parle également de parallélisation, implémenté dans le processeur 10, et apte à répartir les données numériques 11 sur un nombre N_{λ} de canaux de transmission 13, inférieur ou égal au nombre maximal de canaux de transmission Nₘₐₓ. Au cours d'une session de communication, le nombre N_{λ} de canaux de transmission 13 est variable et ajusté en fonction de la grandeur caractéristique de dégradation d'onde. Un module de contrôle 41, implémenté dans le processeur 10, est apte à déterminer ce nombre N_{λ} de canaux de transmission 13, au moyen d'une première fonction décroissante par paliers de la grandeur caractéristique 12 de dégradation d'onde optique.

Le processeur 10 comprend également des modules 42 de codage et/ou d'entrelacement des données numériques 11 réparties sur chacun des canaux de transmission 13. Au cours d'une session de communication, le rendement de codage η, retenu pour chacun des modules de codage 42, est variable et ajusté en fonction de la grandeur caractéristique 12 de dégradation d'onde optique. Le module de contrôle 41 est apte à déterminer ce rendement de codage η au moyen d'une seconde fonction décroissante de la grandeur caractéristique 12 de dégradation d'onde optique.

Les données utiles 11 réparties sur les canaux de transmission 13, et préfentiellement codées et entrelacées, sont ensuite mises en oeuvre pour la modulation de signaux optiques 15 générés par des sources optiques 14. Le dispositif comprend ainsi des moyens d'activation d'un nombre de sources optiques 14 égal au nombre N_{λ} de canaux de transmission 13. Parmi ces moyens d'activation, on pense notamment à des interrupteurs optiques permettant l'émission d'un faisceau optique issu d'une source optique alimentée en données numériques réparties sur un canal de transmission 13.

Le signal optique primaire S₁ est alors généré par multiplexage des signaux optiques 15 émis par les sources optiques 14 activées par lesdits moyens d'activation ; chacun des signaux optiques 15 étant modulé par des données numériques 13. Le multiplexeur en longueur d'onde 16 est dénommé WDM sur la figure 4a pour l'acronyme anglo-saxon *Wavelength Division Multiplexing.* Le signal optique 17 transmis par le multiplexeur 16 peut être amplifié en puissance optique avant transmission, selon une puissance optique totale prédéfinie.

Comme nous l'avons décrit, la configuration de transmission 102 peut être transmise au moyen d'un dispositif dédié et d'un signal tertiaire S3. Elle peut également être transmise au moyen du signal optique primaire S1. Les figures 4a et 4b représente ce cas d'une transmission par le signal optique primaire S1 et selon un premier mode de réalisation possible. Dans ce premier mode, la configuration de transmission 102, qui comprend au moins le nombre N_{λ} de canaux de transmission et, le cas échéant, le rendement de codage et/ou une information de configuration du procédé d'entrelacement, est déterminée par le module de contrôle 41 et transmise à un module de codage 103, avant d'être insérée sur l'une des porteuses optiques, par multiplexage temporel (module 104 sur la figure 4a). Ainsi, le procédé comprend avantageusement une étape de multiplexage temporel, après codage, de la configuration de transmission 102 et des données utiles 11 réparties sur l'un des canaux de transmission 13, suivie éventuellement d'une étape d'entrelacement (module 105 sur la figure 4a) des données résultantes en sortie de multiplexeur. Il est possible d'utiliser des rendements de codage distincts pour les deux flux de données, configuration de transmission et données utiles, afin de rendre plus robuste la transmission des informations de configuration. Compte-tenu du très faible débit requis pour transmettre ces informations de configuration, l'impact sur le débit utile est très limité. Afin de ne pas particulariser l'un des canaux par rapport aux autres comme représenté sur la figure 4a, il est envisagé de dupliquer, à l'émission et à la réception, l'architecture du canal comportant le multiplexeur temporel et la généraliser à tous les canaux ; l'intérêt étant de simplifier l'opération de parallélisation des données, toutes les voies étant alors identiques. Par ailleurs, dans la mesure où les informations de configuration constituent un volume de données limité, cela aura un impact faible sur le débit de données utiles.

Le terminal récepteur du dispositif de transmission présente une architecture fonctionnelle « miroir » de l'architecture fonctionnelle du terminal émetteur. Ainsi, après l'étape de démultiplexage en longueurs d'onde et de conversion de l'information optique en information numérique (convertisseurs 26), le procédé comprend une étape de désentrelacement et de décodage réalisée pour chacun des signaux électriques 27. Dans ce premier mode de réalisation, la configuration de transmission 102 est reconstituée lors de cette étape de désentrelacement et de décodage, réalisée sur le canal qui porte la configuration de transmission 102. Cette configuration de transmission, transmise au module de contrôle 45 du processeur 28, permet de fournir aux modules 43 de désentrelacement et de décodage, les informations nécessaires, notamment le rendement de codage et les informations de configuration du procédé d'entrelacement mis en oeuvre au niveau du terminal émetteur. De même, le nombre N_{λ} de canaux de transmission est fourni à un module 44 de sérialisation, apte à reconstituer les données numériques 11, en s'adaptant en temps réel à un nombre de canaux de transmission variable. Autrement dit, le procédé comprend une étape de reconstitution des données numériques 11 reçues par le terminal récepteur configurée en temps réel au moyen de la configuration de transmission.

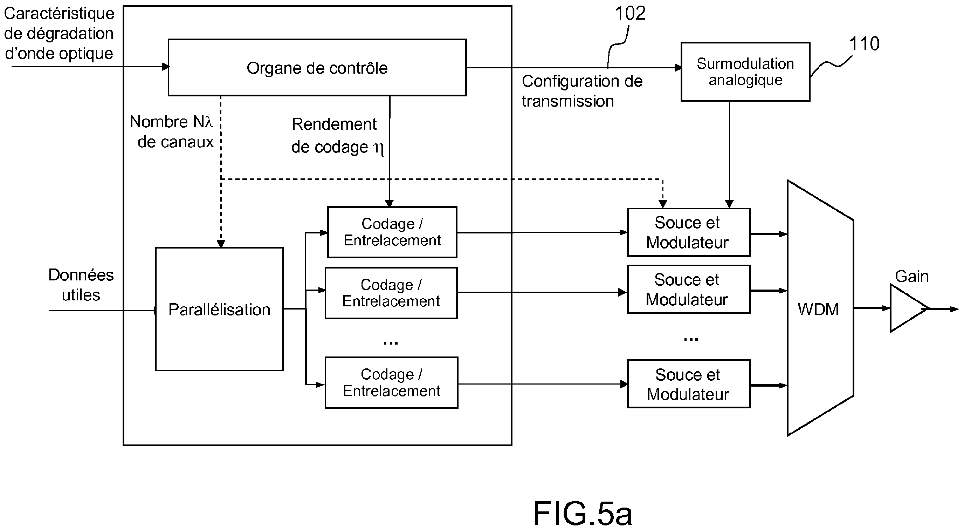

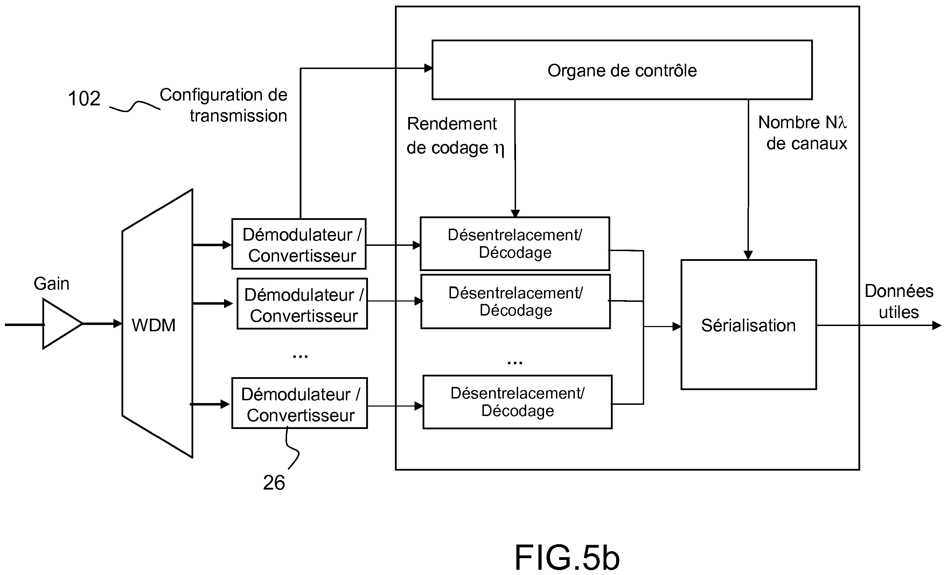

Les figures 5a et 5b représentent l'architecture fonctionnelle respectivement d'un terminal émetteur et d'un terminal récepteur selon un second mode de réalisation de l'invention. Ce second mode de réalisation comprend plusieurs modules identiques à ceux représentés sur les figures 4a et 4b. Ces modules repris sur les figures 5a et 5b ne sont pas décrits à nouveau. Le second mode de réalisation se distingue du premier par le moyen mis en oeuvre pour transmettre la configuration de transmission 102. Dans ce second cas, cette dernière est transmise au terminal récepteur par sur-modulation d'une des porteuses optiques, au moyen du module fonctionnel 110 dit de sur-modulation analogique. Il est envisagé notamment une sur-modulation à basse fréquence, typiquement de l'ordre de 10 kHz à 10 MHz, superposée aux données utiles à haut débit sous forme de « pilot tone », ou d'une sous porteuse radiofréquence placée au-delà du spectre en bande de base du signal électrique. Compte-tenu de la modulation numérique du signal utilisée pour la transmission des données utiles, ce signal n'est pas perturbé, ou très peu, par l'ajout d'une sur-modulation analogique de faible amplitude, typiquement de l'ordre de quelques pourcents, contenant les informations sur la configuration utilisée (nombre de longueur d'onde, taux de codage, etc...). En particulier, une sous-porteuse avec modulation de fréquence peut être utilisée pour coder la configuration utilisée. Dans le terminal récepteur, comme représenté sur la figure 5b, la configuration de transmission est reconstituée par un filtrage approprié dans le domaine électrique, c'est-à-dire après conversion optique/électrique, au moyen d'un convertisseur 26. Ainsi, le procédé comprend avantageusement une étape de sur-modulation analogique d'un des signaux optiques 15 par la configuration de transmission 102.

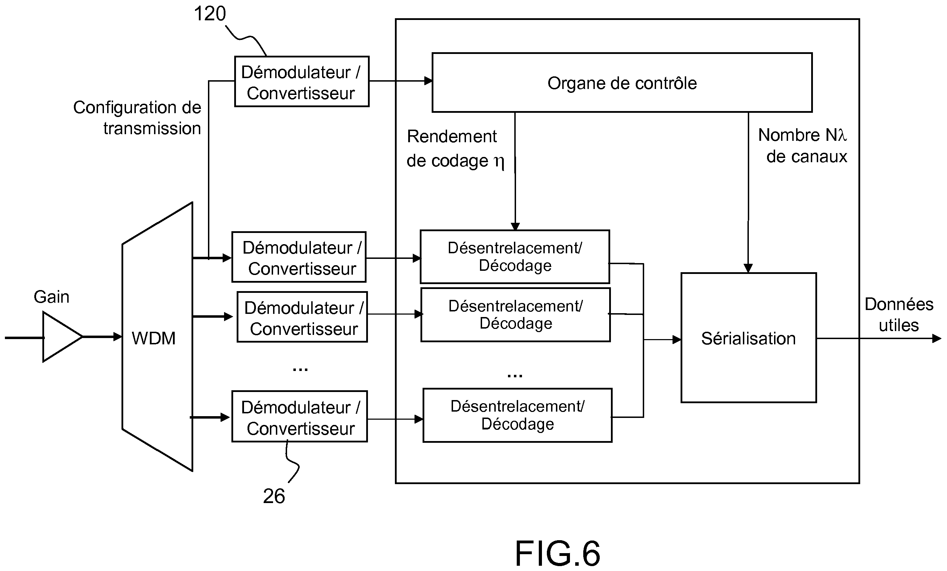

La figure 6 représente l'architecture fonctionnelle d'un terminal récepteur selon un troisième mode de réalisation de l'invention. Dans ce mode de réalisation, la configuration de transmission est reconstituée au moyen d'un convertisseur optique/électrique dédié 120. Enfin, notons qu'un autre mode de réalisation envisagé consiste à utiliser une longueur d'onde supplémentaire uniquement pour mettre en oeuvre un canal de signalisation hors bande. Compte-tenu du très faible débit requis pour transmettre ces informations de signalisation, la puissance de ce signal pourra être très faible par rapport aux longueurs d'onde utilisées pour la transmission des données utiles de façon à ne pas pénaliser la puissance optique des signaux de données utiles. Rappelons en effet que l'amplificateur optique fonctionne à puissance optique de sortie constante et répartit la puissance sur les différentes longueurs d'onde utilisées. Ce dernier mode de réalisation présente l'inconvénient de requérir une longueur d'onde spécifique pour la transmission de la configuration de transmission 102 mais présente l'avantage de n'affecter en rien les canaux utilisés pour la transmission des données utiles 11.

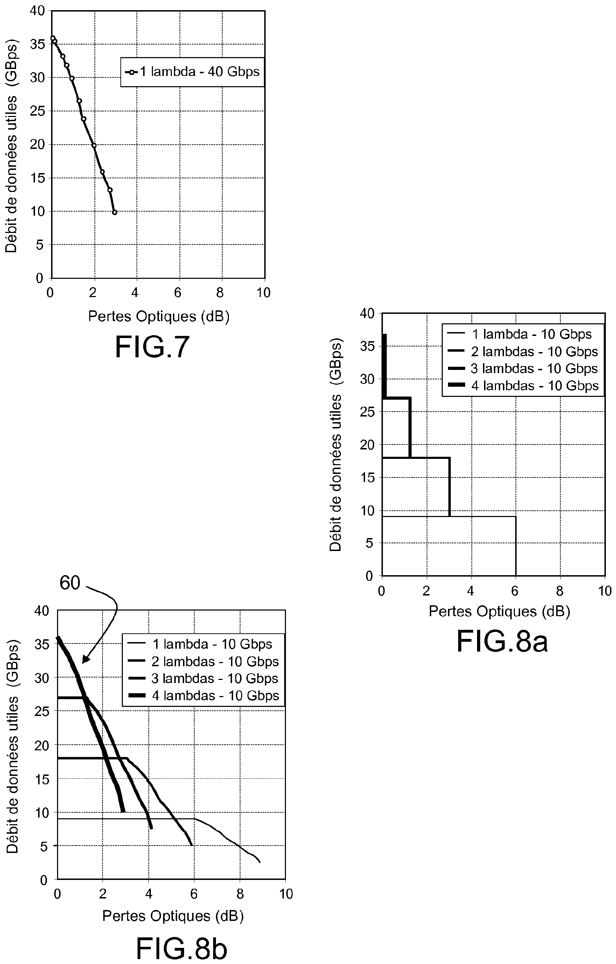

La figure 7 illustre le principe de fonctionnement d'un procédé de transmission optique selon l'état connu de la technique dans lequel le rendement de codage est adapté. La figure 8a illustre le principe de fonctionnement d'un procédé de transmisson optique selon un premier aspect de l'invention dans lequel le nombre de canaux de transmission est adapté aux conditions de transmission. La figure 8b illustre le principe de fonctionnement d'un procédé de transmisson optique selon un second aspect de l'invention dans lequel le rendement de codage et le nombre de canaux de transmission sont adaptés aux conditions de transmission.

Ces trois figures représentent le débit de données utiles en fonction des pertes optiques entre les terminaux émetteur et récepteur. Pour ces trois figures empiriques, un taux d'erreur de bit proche de zéro est requis en réception, une valeur seuil de 10⁻¹² après décodage corrrespondant à une exigence connue étant retenue. Sur la figure 7, le dispositif de transmission comprend une source optique de débit brut (incluant les bits de redondance introduits par le code correcteur d'erreur) nominal égal à 40 Gigabits par seconde (Gbps). Un rendement de codage variable et ajusté en fonction des pertes optiques est mis en oeuvre. Pour des pertes optiques nulles, un rendement de codage de 90% est retenu, le débit de données utiles est alors de 36 Gbps. A mesure que les pertes optiques augmentent, le rendement de codage est abaissé pour maintenir un taux d'erreur de bit proche de zéro. Cette technique, efficace pour des pertes optiques d'amplitude modérée, devient inefficace pour des pertes optiques plus importantes.

Sur la figure 8a, le dispositif de transmission comprend quatre sources optiques présentant chacune un débit brut nominal de 10 Gbps et des moyens de multiplexage. Pour des pertes optiques limitées, le procédé selon l'invention détermine un nombre de canaux de transmission élevé, le débit utile est réparties sur quatres longueurs d'ondes. Pour chacun des canaux de transmission, un rendement de codage fixe de 90% est retenu. Pour des pertes optiques nulles, le débit de données utiles est alors de 36 Gbps. A mesure que les pertes optiques augmentent, le procédé réduit le nombre de canaux de transmission. Pour des pertes optiques élevées, par exemple comprises entre 4 et 6 dB, une seule source optique est sollicitée.

Le dispositif de transmission de la figure 8b comprend aussi quatre sources présentant chacune un débit nominal de 10 Gbps. Dans ce cas, le dispositif comprend en plus des moyens de multiplexage, des moyens de codage selon un rendement variable. Pour des pertes optiques limitées, le procédé selon l'invention détermine un nombre de canaux de transmission élevé, le débit utile est réparti sur quatres longueurs d'ondes. A mesure que les pertes optiques augmentent, le rendement de codage est progressivement réduit. Lorsque ces pertes optiques sont supérieures à un seuil prédéfini, le procédé selon l'invention détermine un nombre de canaux de transmission inférieure. Ainsi, la courbe enveloppe 60 de la figure 8b peut être mise en oeuvre dans le module de contrôle 41 du processeur 10 pour définir à chaque instant, le nombre de canaux de transmission 13 et le rendement de codage η.

Ainsi, l'adaptation du rendement de codage permet avantageusement d'ajuster le débit utile pour de relativement faibles variations des conditions de transmission. La combinaison de l'adaptation du nombre de canaux de multiplexage et du rendement de codage permet à la fois de couvrir une plage étendue de conditions de transmission et une graduation fine du débit utile à l'intérieur de cette plage. Cette configuration est particulièrement avantageuse, par exemple dans le cas d'un satellite dont une mission est le relais de données. Au cours d'une session de communication, le satellite doit transmettre un volume de données, par exemple d'imagerie, vers un terminal fixe terrestre. Ce type de satellite est généralement en orbite basse, la durée d'une session de communication est courte et il convient d'optimiser le transfert des données pendant la période. En fonction des conditions de transmission mesurées à chaque instant de la session de communication, le procédé sélectionne un nombre de canaux adapté. Pour optimiser le débit utile en maintenant un taux d'erreur dans des limites acceptables, le procédé ajuste aussi le débit utile par le rendement de codage. Cette double adaptation permet avantageusement d'optimiser le débit utile pour une puissance optique disponible donnée, par exemple délivrée par un amplificateur optique utilisé en saturation.

## Revendications

1. Procédé de transmission de données numériques (11) par satellite, par un signal optique primaire (S₁) entre un terminal émetteur (T_{E}) et un terminal récepteur (T_{R}), comportant des étapes consistant à :
- déterminer une grandeur caractéristique (12) de dégradation d'onde optique entre le terminal émetteur (T_{E}) et le terminal récepteur (T_{R}),
- déterminer un nombre (N_{λ}) de canaux de transmission (13) au moyen d'une première fonction décroissante par paliers de la grandeur caractéristique (12) de dégradation d'onde optique,
- répartir les données numériques (11) sur les canaux de transmission (13),
- moduler des signaux optiques (15) de longueurs d'ondes distinctes, en nombre égal au nombre (N_{λ}) de canaux de transmission (13) ; chacun des signaux optiques (15) respectifs étant modulé par des données numériques (11) réparties respectivement sur l'un des canaux de transmission (13),
- générer le signal optique primaire (S₁) par multiplexage en longueur d'onde des signaux optiques (15),
- transmettre une configuration de transmission (102) du terminal émetteur (T_{E}) au terminal récepteur (T_{R}); la configuration de transmission (102) comprenant au moins le nombre (N_{λ}) de canaux de transmission (13).

2. Procédé selon la revendication 1, comportant des étapes consistant à :
- déterminer un rendement de codage (η), au moyen d'une seconde fonction décroissante de la grandeur caractéristique (12) de dégradation d'onde optique,
- coder les données numériques (11) réparties sur chacun des canaux de transmission (13) selon le rendement de codage (η) déterminé précédemment ;
le rendement de codage (η) étant défini comme un quotient d'un débit de bits utiles par un débit de bits transmis en sortie de codeur ; la configuration de transmission (102) comprenant également le rendement de codage (η).

3. Procédé selon l'une des revendications précédentes, comportant une étape d'entrelacement des données numériques (11) réparties sur chacun des canaux de transmission (13) ; la configuration de transmission (102) comprenant également une information de configuration d'entrelacement.

4. Procédé selon l'une des revendications précédentes, suivant lequel la grandeur caractéristique (12) de dégradation d'onde optique est déterminée par mesure au niveau du terminal émetteur (T_{E}) d'un signal optique secondaire (S₂) émis par le terminal récepteur (T_{R}) et reçu par le terminal émetteur (T_{E}).

5. Procédé selon l'une des revendications précédentes, suivant lequel la grandeur caractéristique (12) de dégradation d'onde optique est déterminée par calcul au moyen d'une fonction prédéterminée.

6. Procédé selon l'une des revendications précédentes, comportant une étape de multiplexage temporel de la configuration de transmission (102) et des données utiles (11) réparties sur au moins l'un des canaux de transmission (13).

7. Procédé selon l'une des revendications 1 à 4, comportant une étape de sur-modulation analogique d'un des signaux optiques (15) par la configuration de transmission (102).

8. Procédé selon l'une des revendications précédentes, comportant une étape de reconstitution des données numériques (11) reçues par le terminal récepteur (T_{R}) configurée en temps réel au moyen de la configuration de transmission (102).

9. Procédé selon l'une quelconque des revendications précédentes, dans lequel les données numériques sont transmises par le signal optique primaire entre un satellite et la terre.

10. Procédé selon la revendication précédente, dans lequel le terminal émetteur est installé sur un satellite et le terminal récepteur est situé sur la terre.

11. Dispositif de transmission de données numériques (11) par satellite par un signal optique primaire (S₁) comprenant un terminal émetteur (T_{E}) et un terminal récepteur (T_{R}) ; ledit terminal émetteur (T_{E}) comprenant :
- un processeur (10), comprenant des moyens pour répartir et transmettre des données numériques (11) sur des canaux de transmission (13),
- des sources optiques (14), aptes à émettre des signaux optiques (15) de longueurs d'ondes distinctes; chacune des sources optiques (14) comprenant des moyens pour moduler le signal optique (15) de ladite source optique (14) en fonction de données numériques (11) transmises par le processeur (10) sur un canal de transmission (13),
- un multiplexeur de longueur d'onde (16), apte à générer le signal optique primaire (S₁) par multiplexage en longueur d'onde de signaux optiques (15) émis par les sources optiques (14) ;
- des moyens pour déterminer une grandeur caractéristique (12) de dégradation d'onde optique entre les terminaux émetteur (T_{E}) et récepteur (T_{R}),
- un module de répartition (40), implémenté dans le processeur (10), apte à répartir les données numériques (11) sur un nombre (N_{λ}) de canaux de transmission (13), inférieur ou égal au nombre de sources optiques (14),
- un module de contrôle (41), implémenté dans le processeur (10), apte à déterminer le nombre (N_{λ}) de canaux de transmission (13), au moyen d'une fonction décroissante par paliers de la grandeur caractéristique (12) de dégradation d'onde optique,
- des moyens d'activation d'un nombre de sources optiques (14) égal au nombre (N_{λ}) de canaux de transmission (13) ; le signal optique primaire (S₁) étant généré par multiplexage des signaux optiques (15) émis par les sources optiques (14) ainsi activées; chacun des signaux optiques (15) étant modulé par des données numériques (11).

12. Dispositif selon la revendication 11, dont le module processeur (10) du terminal émetteur (T_{E}) comprend en outre des modules de codage de données numériques (11) réparties sur chacun des canaux de transmission (13),
ledit codage étant **caractérisé par** un rendement de codage (η) variable, déterminé par le module de contrôle (41) au moyen d'une fonction décroissante de la grandeur caractéristique (12) de dégradation d'onde optique,
ledit rendement de codage (η) étant défini comme un quotient d'un débit de bits utiles par un débit de bits transmis en sortie de codeur.

13. Dispositif selon l'une des revendications 11 à 12, dont le module processeur (10) du terminal émetteur (T_{E}) comprend en outre des modules d'entrelacement de données numériques (11) réparties sur chacun des canaux de transmission (13).

14. Dispositif selon l'une des revendications 11 à 13, dont le terminal récepteur (T_{R}) comprend une source optique (29) et une interface optique d'émission (30), aptes à émettre un signal optique secondaire (S₂) à destination du terminal émetteur (T_{E}), et dont les moyens pour déterminer la grandeur caractéristique (12) du terminal émetteur (T_{E}) comprennent une interface optique de réception (20) du signal optique secondaire (S₂), apte à réceptionner le signal optique secondaire (S₂) ; la grandeur caractéristique (12) de dégradation d'onde optique entre les terminaux émetteur (T_{E}) et récepteur (T_{R}) étant mesurée par réception du signal optique (S₂).

15. Dispositif selon l'une des revendications 11 à 14, dont le terminal émetteur (T_{E}) comprend un amplificateur optique de puissance (18) pour amplifier le signal optique primaire (S₁).

16. Dispositif selon l'une des revendications 11 à 15, dont le terminal émetteur (T_{E}) comprend un dispositif d'émission (100) d'un signal tertiaire (S₃) à destination du terminal récepteur (T_{R}), et dont le terminal récepteur (T_{R}) comprend un dispositif de réception (102) du signal tertiaire (S3) ; le signal tertiaire (S₃) étant porteur d'une configuration de transmission (102) comprenant au moins le nombre (N_{λ}) de canaux de transmission (13), permettant au terminal récepteur (T_{R}) de traiter les données utiles (11) transmise par le signal optique primaire (S₁).

17. Dispositif selon la revendication 16, dont le signal tertiaire (S₃) est un signal optique, de longueur d'onde distincte des longueurs d'ondes des signaux optiques (15) porteurs des données utiles (11).

18. Dispositif selon la revendication 16, dont le signal tertiaire (S₃) est un signal hyperfréquence.

19. Dispositif selon l'une des revendications 11 à 15, dont le terminal récepteur (T_{R}) comprend :
- un démultiplexeur de longueur d'onde (24) apte à générer par démultiplexage du signal optique primaire (S₁), des signaux optiques (25) de longueurs d'ondes distinctes,
- des convertisseurs (26), aptes à convertir en signaux électriques (27) chacun des signaux optiques (25) de longueurs d'ondes distinctes,
- un processeur (28), comprenant des moyens de recombinaison des signaux électriques (27) pour reconstituer les données numériques (11) transmises par le terminal émetteur (T_{E}).

20. Dispositif selon l'une quelconque des revendications 11 à 19, dans lequel les données numériques sont transmises par le signal optique primaire entre un satellite et la terre.

21. Dispositif selon la revendication précédente, dans lequel le terminal émetteur est installé sur un satellite et le terminal récepteur est situé sur la terre.

## Patentansprüche

1. Verfahren zur Übertragung von digitalen Daten (11) per Satellit, durch ein primäres optisches Signal (S₁) zwischen einem Senderterminal (T_{E}) und einem Empfängerterminal (T_{R}), folgende Schritte beinhaltend:
- Ermitteln einer charakteristischen Größe (12) der Degradation der optischen Welle zwischen dem Senderterminal (T_{E}) und dem Empfängerterminal (T_{R}),
- Ermitteln einer Anzahl (N_{λ}) von Übertragungskanälen (13) mit Hilfe einer ersten in Stufen absteigenden Funktion der charakteristischen Größe (12) der Degradation der optischen Welle,
- Verteilen der digitalen Daten (11) auf die Übertragungskanäle (13),
- Modulieren von optischen Signalen (15) unterschiedlicher Wellenlängen, deren Anzahl der Anzahl (N_{λ}) von Übertragungskanälen (13) entspricht; wobei jedes der jeweiligen optischen Signale (15) durch digitale Daten (11) moduliert wird, welche jeweils auf einen der Übertragungskanäle (13) verteilt sind,
- Erzeugen des primären optischen Signals (S₁) durch Wellenlängen-Multiplexen der optischen Signale (15),
- Übertragen einer Übertragungskonfiguration (102) des Senderterminals (T_{E}) an den Empfängerterminal (T_{R}); wobei die Übertragungskonfiguration (102) mindestens die Anzahl (N_{λ}) an Übertragungskanälen (13) beinhaltet.

2. Verfahren nach Anspruch 1, folgende Schritte beinhaltend:
- Ermitteln eines Codierungs-Durchsatzes (1) mit Hilfe einer zweiten stufenweise absteigenden Funktion der charakteristischen Größe (12) der Degradation der optischen Welle,
- Codieren der auf einen jeden der Übertragungskanäle (13) verteilten digitalen Daten (11) je nach zuvor ermitteltem Codierungs-Durchsatz (η);
wobei der Codierungs-Durchsatz (η) als ein Quotient eines Nutz-Bit-Durchsatzes durch einen am Codierer-Ausgang übertragenen Bit-Durchsatz definiert wird, wobei die Übertragungskonfiguration (102) ebenfalls den Codierungs-Durchsatz beinhaltet (1).

3. Verfahren nach einem der vorhergehenden Ansprüche, beinhaltend einen Schritt der Verflechtung der auf einen jeden der Übertragungskanäle (13) verteilten digitalen Daten (11); wobei die Übertragungskonfiguration (102) ebenfalls eine Verflechtungskonfigurations-Information beinhaltet.

4. Verfahren nach einem der vorhergehenden Ansprüche, bei welchem die charakteristische Größe (12) der Degradation der optischen Welle durch Messung am Senderterminal (T_{E}) eines sekundären optischen Signals (S₂) ermittelt wird, welches vom Empfängerterminal (T_{R}) gesendet und vom Senderterminal (T_{E}) empfangen wird.

5. Verfahren nach einem der vorhergehenden Ansprüche, bei welchem die charakteristische Größe (12) der Degradation der optischen Welle durch Berechnung mit Hilfe einer vorbestimmten Funktion ermittelt wird.

6. Verfahren nach einem der vorhergehenden Ansprüche, beinhaltend einen Schritt des Zeit-Multiplexens der Übertragungskonfiguration (102) und der auf mindestens einen der Übertragungskanäle (13) verteilten Nutzdaten (11).

7. Verfahren nach einem der vorhergehenden Ansprüche 1 bis 4, beinhaltend einen Schritt der analogen Übermodulation eines der optischen Signale (15) durch die Übertragungskonfiguration (102).

8. Verfahren nach einem der vorhergehenden Ansprüche, beinhaltend einen Schritt der Wiederherstellung der vom Empfängerterminal (T_{R}) empfangenen digitalen Daten (11), welche in Echtzeit mit Hilfe der Übertragungskonfiguration (102) konfiguriert wird.

9. Verfahren nach einem der vorhergehenden Ansprüche, bei welchem die digitalen Daten durch das primäre optische Signal zwischen einem Satelliten und der Erde übertragen werden.

10. Verfahren nach dem vorhergehenden Anspruch, bei welchem der Senderterminal auf einem Satelliten installiert ist und der Empfängerterminal auf der Erde befindlich ist.

11. Verfahren zur Übertragung von digitalen Daten (11) per Satellit durch ein primäres optisches Signal (S₁), beinhaltend einen Senderterminal (T_{E}) und einen Empfängerterminal (T_{R}), wobei der Senderterminal (T_{E}) Folgendes beinhaltet:
- einen Prozessor (10), beinhaltend Mittel zum Verteilen und Übertragen der digitalen Daten (11) auf Übertragungskanäle (13),
- optische Quellen (14), in der Lage, optische Signale (15) unterschiedlicher Wellenlängen zu senden; wobei jede der optischen Quellen (14) Mittel zum Modulieren des optischen Signals (15) der optischen Quelle (14) in Abhängigkeit von digitalen Daten (11) beinhaltet, welche vom Prozessor (10) auf einen Übertragungskanal (13) übertragen werden,
- einen Wellenlängen-Multiplexer (16), in der Lage, das primäre optische Signal (S₁) durch Wellenlängen-Multiplexen von optischen Signalen (15) zu erzeugen, welche von den optischen Quellen (14) gesendet werden;
- Mittel zum Ermitteln einer charakteristischen Größe (12) der Degradation der optischen Welle zwischen dem Senderterminal (T_{E}) und dem Empfängerterminal (T_{R}),
- ein Verteilungsmodul (40), implementiert im Prozessor (10), in der Lage, die digitalen Daten (11) auf eine Anzahl (N_{λ}) von Übertragungskanälen (13) zu verteilen, welche geringer oder gleich der Anzahl von optischen Quellen ist (14),
- ein Steuerungsmodul (41), implementiert im Prozessor (10), in der Lage, die Anzahl (N_{λ}) von Übertragungskanälen (13) mit Hilfe einer stufenweise absteigenden Funktion der charakteristischen Größe (12) der Degradation der optischen Welle zu ermitteln;
- Mittel zum Aktivieren einer Anzahl von optischen Quellen (14), welche der Anzahl (N_{λ}) von Übertragungskanälen (13) entspricht; wobei das primäre optische Signal (S₁) durch Multiplexen der optischen Signale (15) erzeugt wird, welche von den optischen Quellen (14) gesendet werden, die solchermaßen aktiviert wurden; wobei jedes der optischen Signale (15) durch digitale Daten (11) moduliert wird.

12. Vorrichtung nach Anspruch 11, deren Prozessor-Modul (10) des Senderterminals (T_{E}) außerdem Codierungs-Module von auf jeden der Übertragungskanäle (13) verteilten digitalen Daten (11) beinhaltet,
wobei die Codierung durch einen variablen Codierungs-Durchsatz (η) gekennzeichnet ist, ermittelt durch das Steuerungsmodul (41) mit Hilfe einer absteigenden Funktion der charakteristischen Größe (12) der Degradation der optischen Welle,
wobei der Codierungs-Durchsatz (η) als ein Quotient eines Nutz-Bit-Durchsatzes durch einen am Codierer-Ausgang übertragenen Bit-Durchsatz definiert wird.

13. Vorrichtung nach einem der Ansprüche 11 bis 12, deren Prozessor-Modul (10) des Senderterminals (T_{E}) zudem Verflechtungs-Module von auf jeden der Übertragungskanäle (13) verteilten digitalen Daten (11) beinhaltet.

14. Vorrichtung nach einem der Ansprüche 11 bis 13, deren Empfängerterminal (T_{R}) eine optische Quelle (29) und eine optische Sendeschnittstelle (30) beinhaltet, welche in der Lage sind, ein sekundäres optisches Signal (S₂) an den Senderterminal (T_{E}) zu senden, und deren Mittel zum Ermitteln der charakteristischen Größe (12) des Senderterminals (T_{E}) eine optische Empfangsschnittstelle (20) des sekundären optischen Signals (S₂) beinhalten, welche in der Lage ist, das sekundäre optische Signal (S₂) zu empfangen; wobei die charakteristische Größe (12) der Degradation der optischen Welle zwischen dem Senderterminal (T_{E}) und dem Empfängerterminal (T_{R}) durch Empfang des optischen Signals (S₂) gemessen wird.

15. Vorrichtung nach einem der Ansprüche 11 bis 14, deren Senderterminal (T_{E}) einen optischen Leistungsverstärker (18) zum Verstärken des primären optischen Signals (S₁) beinhaltet.

16. Vorrichtung nach einem der Ansprüche 11 bis 15, deren Senderterminal (T_{E}) eine Sendevorrichtung (100) eines tertiären Signals (S₃) an den Empfängerterminal (T_{R}) beinhaltet, und deren Empfängerterminal (T_{R}) eine Empfangsvorrichtung (102) des tertiären Signals (S₃) beinhaltet; wobei das tertiäre Signal (S₃) Träger einer Übertragungskonfiguration (102) ist, welche mindestens die Anzahl (N_{λ}) an Übertragungskanälen (13) beinhaltet, welche es dem Empfängerterminal (T_{R}) ermöglicht, die Nutzdaten (11) zu bearbeiten, welche vom primären optischen Signal (S₁) übertragen wurden.

17. Vorrichtung nach Anspruch 16, bei welcher das tertiäre Signal (S₃) ein optisches Signal ist, dessen Wellenlänge sich von den Wellenlängen der optischen Signale (15) unterscheidet, welche Träger der Nutzdaten (11) sind.

18. Vorrichtung nach Anspruch 16, deren tertiäres Signal (S₃) ein Hyperfrequenzsignal ist.

19. Vorrichtung nach einem der Ansprüche 11 bis 15, deren Empfängerterminal (T_{R}) Folgendes beinhaltet:
- einen Wellenlängen-Demultiplexer (24), in der Lage, durch Demultiplexen des primären optischen Signals (S₁) optische Signale (25) unterschiedlicher Wellenlängen zu erzeugen,
- Umwandler (26), in der Lage, jedes der optischen Signale (25) unterschiedlicher Wellenlängen in elektrische Signale (27) umzuwandeln,
- einen Prozessor (28), beinhaltend Mittel zum Rekombinieren der elektrischen Signale (27), zum Wiederherstellen der vom Senderterminal (T_{E}) übertragenen digitalen Daten (11) .

20. Vorrichtung nach einem der Ansprüche 11 bis 19, bei welcher die digitalen Daten vom primären optischen Signal zwischen einem Satelliten und der Erde übertragen werden.

21. Vorrichtung nach dem vorhergehenden Anspruch, bei welcher der Senderterminal auf einem Satelliten installiert ist und der Empfängerterminal auf der Erde befindlich ist.

## Claims

1. A method for transmitting digital data (11) by satellite, by a primary optical signal (S₁) between a transmitter terminal (T_{E}) and a receiver terminal (T_{R}), comprising steps consisting in:
- determining a characteristic magnitude (12) of optical-wave degradation between the transmitter terminal (T_{E}) and the receiver terminal (T_{R}),
- determining a number (N_{λ}) of transmission channels (13) by means of a first stepwise decreasing function of the characteristic magnitude (12) of optical-wave degradation,
- distributing the digital data (11) over the transmission channels (13),
- modulating optical signals (15) of different wavelengths, the number of which is equal to the number (N_{λ}) of transmission channels (13); each of the respective optical signals (15) being modulated by digital data (11) distributed respectively to one of the transmission channels (13),
- generating the primary optical signal (S₁) by means of wavelength multiplexing of the optical signals (15),
- sending a transmission configuration (102) from the transmitter terminal (T_{E}) to the receiver terminal (T_{R}); the transmission configuration (102) comprising at least the number (N_{λ}) of transmission channels (13).

2. The method according to Claim 1, comprising steps consisting in:
- determining an encoding rate (η), using a second decreasing function of the characteristic magnitude (12) of optical-wave degradation,
- encoding the digital data (11) distributed to each of the transmission channels (13) according to the previously determined encoding rate (η);
the encoding rate (η) being defined as a ratio between an effective bit rate and an output bit rate transmitted from the encoder; the transmission configuration (102) also including the encoding rate (η).

3. The method according to any of the preceding claims, comprising an interlacing step for the digital data (11) distributed to each of the transmission channels (13); the transmission configuration (102) also comprising information relating to interlacing configuration.

4. The method according to any of the preceding claims, according to which the characteristic magnitude (12) of optical-wave degradation is determined by measuring, at the transmitter terminal (T_{E}), a secondary optical signal (S₂) sent by the receiver terminal (T_{R}) and received by the transmitter terminal (T_{E}).

5. The method according to any of the preceding claims, according to which the characteristic magnitude (12) of optical-wave degradation is determined by calculation using a predetermined function.

6. The method according to any of the preceding claims, comprising a time-division multiplexing step for the transmission configuration (102) and effective data (11) distributed to at least one of the transmission channels (13).

7. The method according to any of Claims 1 to 4, comprising an analogue overmodulation step for one of the optical signals (15) using the transmission configuration (102).

8. The method according to any of the preceding claims, comprising a reconstitution step for the digital data (11) received by the receiver terminal (T_{R}) configured in real time using the transmission configuration (102).

9. The method according to any one of the preceding claims, in which the digital data are transmitted by the primary optical signal between a satellite and the Earth.

10. The method according to the preceding claim, in which the transmitter terminal is fitted on a satellite and the receiver terminal is located on the Earth.

11. A device for transmitting digital data (11) by satellite using a primary optical signal (S₁) comprising a transmitter terminal (T_{E}) and a receiver terminal (T_{R}); said transmitter terminal (T_{E}) comprising:
- a processor (10) comprising means for distributing and sending digital data (11) over transmission channels (13),
- optical sources (14) that are able to send optical signals (15) of different wavelengths; each of the optical sources (14) comprising means to modulate the optical signal (15) of said optical source (14) as a function of digital data (11) sent by the processor (10) over a transmission channel (13),
- a wavelength multiplexer (16) able to generate the primary optical signal (S₁) by wavelength multiplexing of optical signals (15) sent by the optical sources (14);
- means for determining a characteristic magnitude (12) of optical-wave degradation between the transmitter terminal (T_{E}) and the receiver terminal (T_{R}),
- a distribution module (40), implemented in the processor (10), that is able to distribute the digital data (11) over a number (N_{λ}) of transmission channels (13) that is less than or equal to the number of optical sources (14),
- a control module (41), implemented in the processor (10), that is able to determine the number (N_{λ}) of transmission channels (13), by means of a stepwise decreasing function of the characteristic magnitude (12) of optical-wave degradation,
- activation means for a number of optical sources (14) equal to the number (N_{λ}) of transmission channels (13); the primary optical signal (S₁) being generated by multiplexing the optical signals (15) sent by the optical sources (14) thus activated; each of the optical signals (15) being modulated by digital data (11).

12. The device according to Claim 11, of which the processor module (10) of the transmitter terminal (T_{E}) also comprises encoding modules for digital data (11) distributed to each of the transmission channels (13),
said encoding being **characterized by** a variable encoding rate (η) determined by the control module (41) by means of a decreasing function of the characteristic magnitude (12) of optical-wave degradation,
said encoding rate (η) being defined as a ratio between an effective bit rate and a bit rate outputted from the encoder.

13. The device according to either of Claims 11 to 12, of which the processor module (10) of the transmitter terminal (T_{E}) also comprises interlacing modules for digital data (11) distributed to each of the transmission channels (13).

14. The device according to any of Claims 11 to 13, of which the receiver terminal (T_{R}) comprises an optical source (29) and an optical transmission interface (30) that are able to transmit a secondary optical signal (S₂) to the transmitter terminal (T_{E}), and of which the means for determining the characteristic magnitude (12) of the transmitter terminal (T_{E}) comprise an optical receiver interface (20) of the secondary optical signal (S₂), able to receive the secondary optical signal (S₂); the characteristic magnitude (12) of optical-wave degradation between the transmitter terminal (T_{E}) and the receiver terminal (T_{R}) being measured by receipt of the optical signal (S₂).

15. The device according to any of Claims 11 to 14, of which the transmitter terminal (T_{E}) comprises an optical power amplifier (18) to amplify the primary optical signal (S₁).

16. The device according to any of Claims 11 to 15, of which the transmitter terminal (T_{E}) comprises a device (100) for transmitting a tertiary signal (S₃) to the receiver terminal (T_{R}), and of which the receiver terminal (T_{R}) comprises a device (102) for receiving the tertiary signal (S₃); the tertiary signal (S₃) carrying a transmission configuration (102) including at least the number (N_{λ}) of transmission channels (13), enabling the receiver terminal (T_{R}) to process the effective data (11) sent by the primary optical signal (S₁).

17. The device according to Claim 16, of which the tertiary signal (S₃) is an optical signal with a wavelength different from the wavelengths of the optical signals (15) carrying the effective data (11).

18. The device according to Claim 16, of which the tertiary signal (S₃) is a hyperfrequency signal.

19. The device according to any of Claims 11 to 15, of which the receiver terminal (T_{R}) comprises:
- a wavelength demultiplexer (24) that is able to generate optical signals (25) of different wavelengths by demultiplexing the primary optical signal (S₁),
- converters (26) that are able to convert each of the optical signals (25) of different wavelengths into electrical signals (27),
- a processor (28), comprising means for recombining electrical signals (27) to reconstitute the digital data (11) sent by the transmitter terminal (T_{E}).

20. The device according to any one of Claims 11 to 19, in which digital data are transmitted by the primary optical signal between a satellite and the Earth.

21. The device according to the preceding claim, in which the transmitter terminal is fitted on a satellite and the receiver terminal is located on the Earth.
